Europäisches Patentamt

European Patent Office

Office européen des brevets

(19)

(11) Numéro de publication: **0 241 392**

**A1**

(12) # DEMANDE DE BREVET EUROPEEN

(21) Numéro de dépôt: **87420092.6**

(22) Date de dépôt: **07.04.87**

(51) Int. Cl.³: **A 23 L 1/212**
**A 23 B 7/04**

(30) Priorité: **08.04.86 FR 8605166**

(43) Date de publication de la demande:
**14.10.87 Bulletin 87/42**

(84) Etats contractants désignés:
**AT BE CH DE ES FR GB GR IT LI LU NL SE**

(71) Demandeur: **ETABLISSEMENTS GARNIER, Société Anonyme**
**1, Cours d'Herbouville**
**F-69004 Lyon(FR)**

(72) Inventeur: **Garnier, Patrick**
**2 Rue Pétrus Sambardier**
**F-69004 Lyon(FR)**

(74) Mandataire: **Monnier, Guy et al,**
**Cabinet Monnier 150 Cours Lafayette B.P. 3058**
**F-69393 Lyon Cédex 03(FR)**

(54) Procédé pour la préparation de purées de fruits, ainsi que purées obtenues.

(57) Conformément à l'invention les fruits frais sont tout d'abord surgelés, préférablement par trempage dans de l'azote liquide, jusqu'à une température d'au moins −25°C, puis ils sont broyés avant d'être enfin incorporés dans un produit à forte teneur en extrait sec (sirop de sucre ou pulpe de fruits surgelée).

EP 0 241 392 A1

La présente invention a trait à la préparation des purées ou "coulis" de fruits, du genre de ceux ou celles utilisés aussi bien dans l'industrie de la pâtisserie pour la réalisation de sauces et nappages ou de sorbets et de crèmes glacées, que dans celle des boissons à base de jus de fruits et des préparations pour yaourts.

On sait qu'à l'heure actuelle ces purées de fruits sont obtenues en raffinant par centrifugation une quantité appropriée de fruits frais ou surgelés qui sont ainsi mis en purée : cette opération s'accompagne généralement d'une part d'une cuisson, d'autre part d'une adjonction de sirop de sucre destiné à améliorer la conservation du produit. Ce produit est ensuite surgelé ou pasteurisé afin d'être conservé, à l'état conditionné ou non, à l'abri de toute dégradation jusqu'au moment de son utilisation.

L'inconvénient du processus de fabrication classique réside dans le fait que l'écrasement des fruits par centrifugation provoque, quel que soit le soin apporté à l'opération, une perte d'arême et de vitamines associée à une modification plus ou moins sensible du goût et de la couleur, analogue à celle résultant d'une cuisson du fruit.

C'est à cet inconvénient qu'entend principalement remédier la présente invention, laquelle consiste à procéder à une surgélation des fruits jusqu'à une température négative de l'ordre d'au moins - 25° C, puis à soumettre à une opération de broyage ou de concassage les fruits ainsi durcis, et à incorporer enfin, préférablement sous vide, les particules ou poudres réalisées dans une quantité d'un produit sucré à forte teneur en extrait sec pous l'obtention d'une pâte présentant la consistance désirée.

Conformément à un mode de mise en oeuvre particulièrement avantageux du procédé suivant l'invention, la surgélation des fruits frais est réalisée par le trempage de ceux-ci dans de l'azote liquide. On peut de la sorte obtenir des températures bien inférieures à - 25° C, qui favorisent l'opération subséquente de broyage ou de concassage, laquelle est susceptible d'être effectuée à l'aide de tout appareil classique. On observera que cette opération est préférablement conduite sous vide afin d'éviter la contamination bactérienne du produit pulvérulent ainsi obtenu et l'introduction d'air pouvant entraîner une oxydation ultérieure.

Suivant un premier mode de mise en oeuvre de l'invention, le produit sucré à forte teneur en extrait sec est constitué par du sirop de sucre sec ou inverti, éventuellement addidionné de concentré de fruit, d'épaississants tels que alginate caroube ou autre ou, et en fonction de l'utilisation finale de la purée et des textes de législation applicables à chaque produit, d'autres ingrédients tels que conservateur, sorbate de potassium, acide ascorbique ou autre colorant et renforçateur d'ârome, etc...

On notera à ce propos que dans le cas où la _urgélation initiale a été obtenue par trempage des fruits dans de l'azote liquide, on peut profiter de la température très basse présentée par les poudres ou particules pour chauffer le sirop de sucre jusqu'à envison 50°C en vue de favoriser la dissolution, tout en opérant à une température proche de celle de l'ambiance telle que la pâte réalisée présente une température de l'ordre de 0°C. Cette opération, avantageusement effectuée sous vide, ne nécessite que des mélangeurs classiques aptes à l'obtention d'un produit pâteux parfaitement homogène à température négative, et qui permet ainsi l'incorporation hors bactéries et de manière homogène de fruits frais ou confits, de cellules entières d'agrumes, préalablement surgelés pour leur conférer une texture rigide qui favorise leur réincorporation sans destruction.

Selon un autre mode de mise en oeuvre de l'invention, le produit sucré à forte teneur en extrait sec est formé par de la pulpe de fruits surgelée (de l'ordre de -20°C) qui par suite de sa teneur élevée en extrait sec, peut se présenter sous forme pâteuse et se prêter ainsi à l'incorporation, de manière homogène et hors bactéries, des poudres ou particules de fruits obtenues par broyage ou concassage. Ici également on peut procéder à cette incorporation en ambiance normale sans risque de contamination, par suite des températures très basses de traitement et en utilisant éventuellement le vide pour éviter l'incorporation d'air au mélange, entraînant une oxydation ultérieure.

Dans tous les cas, le produit pâteux obtenu est préférablement conditionné à une température proche de l'ambiance immédiatement après l'opération précédente, afin de maintenir la purée en dehors de toute contamination bactérienne, les pro duits conditionnés étant soit soumis à une surgélation pour être conservés jusqu'au moment de leur utilisation, soit mis en réfrigération pour une utilisation dans le circuit des produits frais, soit ensore soumis successivement aux deux traitements.

Les essais qui ont été menés ont démontré que le procédé suivant l'invention évitait toute perte de vitamines et toute modification de l'arôme des fruits, le goût de la purée obtenue étant identique en intensité et en saveur à celles des fruits frais dont elle garde la couleur.

Il va de soi que les températures indiquées ci-dessus peuvent varier dans une mesure assez large, en fonction notamment de la nature des fruits traités et des conditions de mise en oeuvre du procédé. On comprend en outre que l'invention englobe non seulement le procédé de préparation susvisé, mais également les purées de fruits obtenues.

Revendications

1. Procédé pour la préparation de purées de fruits, caractérisé en ce qu'il consiste à procéder en premier lieu à une surgélation des fruits frais jusqu'à une température négative de l'ordre d'au moins -25°C, puis à soumettre à une opération de broyage ou de concassage des fruits ainsi durcis, et à incorporer enfin les poudres ou particules réalisées dans une quantité d'un produit sucré à forte teneur en extrait sec pour l'obtention d'une pâte présentant la consistance désirée.

2. Procédé suivant la revendication 1, caractérisé en ce que la surgélation des fruits frais est réalisée par trempage de ceux-ci dans de l'azote liquide.

3. Procédé suivant l'une quelconque des revendications 1 et 2, caractérisé en ce que le broyage ou concassage et l'incorporation sont effectués sous vide.

4. Procédé suivant l'une quelconque des revendications 1 à 3, caractérisé en ce que le produit sucré à forte teneur en extrait sec est constitué par du sirop de sucre, avantageusement chauffé en vue de faciliter sa dissolution.

5. Procédé suivant l'une quelconque des revendications 1 à 3, caractérisé en ce que le produit sucré à forte teneur en extrait sec est formé par de la pulpe de fruits surgelée.

6. Procédé suivant l'une quelconque des revendications 1 à 5, caractérisé en ce que l'incorporation des poudres ou particules provenant du broyage ou concassage est réalisée à une température proche de celle de l'ambiance, telle que le mélange pâteux obtenu présente une température finale de l'ordre de 0°C.

7. Procédé suivant la revendications 1 à 6, caractérisé en qu'en plus des poudres ou particules provenant du broyage ou du concassage, on incorpore de manière homogène des fruits

5

entiers frais ou confits ou des cellules d'agrumes préalablement soumis à une surgélation.

8. Purée de fruits, caractérisée en ce qu'elle est obtenue par mise en oeuvre du procédé suivant l'une quelconque des revendications 1 à 7.

**Office européen
des brevets**

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENT ABSTRACTS OF JAPAN, vol. 7, no. 248 (C-193)[1393] 4 novembre 1983; & JP-A-58 134 942 (TAIYOU KAGAKU) 11-08-1983 * Résumé * | 1,2,6 | A 23 L 1/212 A 23 B 7/04 |
| | --- | | |
| X | FR-A-2 307 443 (P. GARNIER) * Revendications 1-3; page 1, ligne 36 - page 2, ligne 23 * | 1,2 | |
| | --- | | |
| Y | SOVIET INVENTIONS ILLUSTRATED, Derwent Publication, GB; & SU-A-187 508 (K.P. LEMARINS) 19-11-1966 * Résumé * | 1,4,8 | |
| | --- | | |
| Y | GB-A-1 582 319 (CADBURY TYPHOO) * Exemple 1 * | 1,4,8 | **DOMAINES TECHNIQUES RECHERCHES (Int. Cl.4)** |
| | --- | | A 23 L |
| A | PATENT ABSTRACTS OF JAPAN, vol. 4, no. 101 (C-19)[583] 19 juillet 1980; & JP-A-55 64 747 (SHOWA DENKO) 15-05-1980 * Résumé * | 1,2 | A 23 B |
| | ----- | | |

Le présent rapport de recherche a été établi pour toutes les revendications

| Lieu de la recherche LA HAYE | Date d'achèvement de la recherche 03-07-1987 | Examinateur DESMEDT G.R.A. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82